# EUROPEAN PATENT APPLICATION

(11) **EP 4 443 996 A1**
(43) Date of publication of application: **09.10.2024**
(21) Application number: 24168611.2
(22) Date of filing: 05.04.2024
(51) Int. Cl.: H04W 64/00

(54) **DETERMINING A POSITIONING METHOD OR FUNCTIONALITY FOR POSITIONING A USER EQUIPMENT**

(30) Priority: 06.04.2023 FI 20235400
(71) Applicant: Nokia Technologies Oy, 02610 Espoo (FI)
(72) Inventor: FEKI, Afef, Sceaux (FR); ASHRAF, Muhammad Ikram, Espoo (FI); MASRI, Ahmad, Tampere (FI); CARRILLO MELGAREJO, Dick, Lappeenranta (FI); KESHAVAMURTHY, Prajwal, Munich (DE)
(74) Representative: Nokia EPO representatives

(57) **Abstract**

Disclosed is a method comprising establishing a switching policy for switching between a first and a second positioning methods or functionalities that are for positioning a user equipment, providing an indication regarding the switching policy to the user equipment, wherein the switching policy comprises an indication of a computational model that is to be used by the user equipment or an access node for the first positioning method or functionality, receiving, from the user equipment or the access node, a first confidence level associated with an output of the computational model used by the user equipment or the access node for the first positioning method or functionality, and determining, based on the confidence level, if a positioning method or functionality, that is being used, is to be switched from the first positioning method or functionality to the second positioning method or functionality.

## Description

### Field

The following exemplary embodiments relate to wireless communication and positioning a user equipment.

### Background

Cellular communication networks may provide various services to a user equipment (UE) that is capable of connecting to the cellular communication network. In addition to offering wireless connectivity, the network may be configured to allow determining a location of the UE. In other words, the cellular communication network may offer positioning of a UE. The level of accuracy required for the positioning may be dependent on the use case. Yet, enhancements to the accuracy of the positioning are desired.

### Brief Description

The scope of protection sought for various embodiments of the invention is set out by the independent claims. The exemplary embodiments and features, if any, described in this specification that do not fall under the scope of the independent claims are to be interpreted as examples useful for understanding various embodiments of the invention.

According to a first aspect there is provided an apparatus comprising means for performing: establishing a switching policy for switching between a first and a second positioning methods or functionalities that are for positioning a user equipment, providing an indication regarding the switching policy to the user equipment or an access node, wherein the switching policy comprises an indication of a computational model that is to be used by the user equipment or the access node for the first positioning method or functionality, receiving, from the user equipment or the access node, a first confidence level associated with an output of the computational model used by the user equipment or the access node for the first positioning method or functionality, and determining, based on the confidence level, if a positioning method or functionality, that is being used, is to be switched from the first positioning method or functionality to the second positioning method or functionality.

In some example embodiments according to the first aspect, the means comprises at least one processor, and at least one memory storing instructions that, when executed by the at least one processor, to cause the performance of the apparatus.

According to a second aspect there is provided an apparatus comprising at least one processor, and at least one memory storing instructions that, when executed by the at least one processor, to cause the apparatus at least to: establish a switching policy for switching between a first and a second positioning methods or functionalities that are for positioning a user equipment; provide an indication regarding the switching policy to the user equipment or an access node, wherein the switching policy comprises an indication of a computational model that is to be used by the user equipment or the access node for the first positioning method or functionality; receive, from the user equipment or the access node, a first confidence level associated with an output of the computational model used by the user equipment or the access node for the first positioning method or functionality; and determine, based on the confidence level, if a positioning method or functionality, that is being used, is to be switched from the first positioning method or functionality to the second positioning method or functionality.

According to a third aspect there is provided a method comprising: establishing a switching policy for switching between a first and a second positioning methods or functionalities that are for positioning a user equipment, providing an indication regarding the switching policy to the user equipment or the access node, wherein the switching policy comprises an indication of a computational model that is to be used by the user equipment or the access node for the first positioning method or functionality, receiving, from the user equipment or the access node, a first confidence level associated with an output of the computational model used by the user equipment or the access node for the first positioning method or functionality, and determining, based on the confidence level, if a positioning method or functionality, that is being used, is to be switched from the first positioning method or functionality to the second positioning method or functionality.

In some example embodiment according to the third aspect the method is a computer implemented method.

According to a fourth aspect there is provided a computer program comprising instructions which, when executed by an apparatus, cause the apparatus to perform at least the following: establish a switching policy for switching between a first and a second positioning methods or functionalities that are for positioning a user equipment; provide an indication regarding the switching policy to the user equipment or the access node, wherein the switching policy comprises an indication of a computational model that is to be used by the user equipment or the access node for the first positioning method or functionality; receive, from the user equipment or the access node, a first confidence level associated with an output of the computational model used by the user equipment or the access node for the first positioning method or functionality; and determine, based on the confidence level, if a positioning method or functionality, that is being used, is to be switched from the first positioning method or functionality to the second positioning method or functionality.

According to a fifth aspect there is provided a computer program comprising instructions stored thereon for performing at least the following: establishing a switching policy for switching between a first and a second positioning methods or functionalities that are for positioning a user equipment, providing an indication regarding the switching policy to the user equipment or an access node, wherein the switching policy comprises an indication of a computational model that is to be used by the user equipment or the access node for the first positioning method or functionality, receiving, from the user equipment or the access node, a first confidence level associated with an output of the computational model used by the user equipment or the access node for the first positioning method or functionality, and determining, based on the confidence level, if a positioning method or functionality, that is being used, is to be switched from the first positioning method or functionality to the second positioning method or functionality.

According to a sixth aspect there is provided a non-transitory computer readable medium comprising program instructions that, when executed by an apparatus, cause the apparatus to perform at least the following: establish a switching policy for switching between a first and a second positioning methods or functionalities that are for positioning a user equipment; provide an indication regarding the switching policy to the user equipment or an access node, wherein the switching policy comprises an indication of a computational model that is to be used by the user equipment or the access node for the first positioning method or functionality; receive, from the user equipment or the access node, a first confidence level associated with an output of the computational model used by the user equipment or the access node for the first positioning method or functionality; and determine, based on the confidence level, if a positioning method or functionality, that is being used, is to be switched from the first positioning method or functionality to the second positioning method or functionality.

According to a seventh aspect there is provided a non-transitory computer readable medium comprising program instructions stored thereon for performing at least the following: establishing a switching policy for switching between a first and a second positioning methods or functionalities that are for positioning a user equipment, providing an indication regarding the switching policy to the user equipment or an access node, wherein the switching policy comprises an indication of a computational model that is to be used by the user equipment or the access node for the first positioning method or functionality, receiving, from the user equipment, a first confidence level associated with an output of the computational model used by the user equipment or the access node for the first positioning method or functionality, and determining, based on the confidence level, if a positioning method or functionality, that is being used, is to be switched from the first positioning method or functionality to the second positioning method or functionality.

According to an eighth aspect there is provided a computer readable medium comprising program instructions that, when executed by an apparatus, cause the apparatus to perform at least the following: establish a switching policy for switching between a first and a second positioning methods or functionalities that are for positioning a user equipment; provide an indication regarding the switching policy to the user equipment or an access node, wherein the switching policy comprises an indication of a computational model that is to be used by the user equipment for the first positioning method or functionality; receive, from the user equipment or the access node, a first confidence level associated with an output of the computational model used by the user equipment or the access node for the first positioning method or functionality; and determine, based on the confidence level, if a positioning method or functionality, that is being used, is to be switched from the first positioning method or functionality to the second positioning method or functionality.

According to a ninth aspect there is provided a computer readable medium comprising program instructions stored thereon for performing at least the following: establishing a switching policy for switching between a first and a second positioning methods or functionalities that are for positioning a user equipment, providing an indication regarding the switching policy to the user equipment or the access node, wherein the switching policy comprises an indication of a computational model that is to be used by the user equipment or the access node for the first positioning method or functionality, receiving, from the user equipment or the access node, a first confidence level associated with an output of the computational model used by the user equipment or the access node for the first positioning method or functionality, and determining, based on the confidence level, if a positioning method or functionality, that is being used, is to be switched from the first positioning method or functionality to the second positioning method or functionality.

According to a tenth aspect there is provided an apparatus comprising means for performing: receiving an indication regarding a switching policy from a location management function, wherein the switching policy is for switching between a first and a second positioning methods or functionalities, and the switching policy comprises an indication of a computational model that is to be used by the apparatus for the first positioning method or functionality, executing the computational model that is for the first positioning method or functionality, obtaining, from the computational model, an output and a first confidence level associated with the output, providing to the location management function an indication of the confidence level for determining, based on the first confidence level, if a positioning method or functionality, that is being used, is to be switched from the first positioning method or functionality to the second positioning method or functionality.

In some example embodiments according to the tenth aspect, the means comprises at least one processor, and at least one memory storing instructions that, when executed by the at least one processor, to cause the performance of the apparatus.

According to an eleventh aspect there is provided an apparatus comprising at least one processor, and at least one memory storing instructions that, when executed by the at least one processor, to cause the apparatus at least to: receive an indication regarding a switching policy from a location management function, wherein the switching policy is for switching between a first and a second positioning methods or functionalities, and the switching policy comprises an indication of a computational model that is to be used by the apparatus for the first positioning method or functionality, execute the computational model that is for the first positioning method or functionality, obtain, from the computational model, an output and a first confidence level associated with the output, provide to the location management function an indication of the confidence level for determining, based on the first confidence level, if a positioning method or functionality, that is being used, is to be switched from the first positioning method or functionality to the second positioning method or functionality.

According to a twelfth aspect there is provided a method comprising: receiving an indication regarding a switching policy from a location management function, wherein the switching policy is for switching between a first and a second positioning methods or functionalities, and the switching policy comprises an indication of a computational model that is to be used by the apparatus for the first positioning method or functionality, executing the computational model that is for the first positioning method or functionality, obtaining, from the computational model, an output and a first confidence level associated with the output, providing to the location management function an indication of the confidence level for determining, based on the first confidence level, if a positioning method or functionality, that is being used, is to be switched from the first positioning method or functionality to the second positioning method or functionality.

In some example embodiment according to the twelfth aspect the method is a computer implemented method.

According to a thirteenth aspect there is provided a computer program comprising instructions which, when executed by an apparatus, cause the apparatus to perform at least the following: receive an indication regarding a switching policy from a location management function, wherein the switching policy is for switching between a first and a second positioning methods or functionalities, and the switching policy comprises an indication of a computational model that is to be used by the apparatus for the first positioning method or functionality, execute the computational model that is for the first positioning method or functionality, obtain, from the computational model, an output and a first confidence level associated with the output, provide to the location management function an indication of the confidence level for determining, based on the first confidence level, if a positioning method or functionality, that is being used, is to be switched from the first positioning method or functionality to the second positioning method or functionality.

According to a fourteenth aspect there is provided a computer program comprising instructions stored thereon for performing at least the following: receiving an indication regarding a switching policy from a location management function, wherein the switching policy is for switching between a first and a second positioning methods or functionalities, and the switching policy comprises an indication of a computational model that is to be used by the apparatus for the first positioning method or functionality, executing the computational model that is for the first positioning method or functionality, obtaining, from the computational model, an output and a first confidence level associated with the output, providing to the location management function an indication of the confidence level for determining, based on the first confidence level, if a positioning method or functionality, that is being used, is to be switched from the first positioning method or functionality to the second positioning method or functionality.

According to a fifteenth aspect there is provided a non-transitory computer readable medium comprising program instructions that, when executed by an apparatus, cause the apparatus to perform at least the following: receive an indication regarding a switching policy from a location management function, wherein the switching policy is for switching between a first and a second positioning methods or functionalities, and the switching policy comprises an indication of a computational model that is to be used by the apparatus for the first positioning method or functionality, execute the computational model that is for the first positioning method or functionality, obtain, from the computational model, an output and a first confidence level associated with the output, provide to the location management function an indication of the confidence level for determining, based on the first confidence level, if a positioning method or functionality, that is being used, is to be switched from the first positioning method or functionality to the second positioning method or functionality.

According to a sixteenth aspect there is provided a non-transitory computer readable medium comprising program instructions stored thereon for performing at least the following: receiving an indication regarding a switching policy from a location management function, wherein the switching policy is for switching between a first and a second positioning methods or functionalities, and the switching policy comprises an indication of a computational model that is to be used by the apparatus for the first positioning method or functionality, executing the computational model that is for the first positioning method or functionality, obtaining, from the computational model, an output and a first confidence level associated with the output, providing to the location management function an indication of the confidence level for determining, based on the first confidence level, if a positioning method or functionality, that is being used, is to be switched from the first positioning method or functionality to the second positioning method or functionality.

According to a seventeenth aspect there is provided a computer readable medium comprising program instructions that, when executed by an apparatus, cause the apparatus to perform at least the following: receive an indication regarding a switching policy from a location management function, wherein the switching policy is for switching between a first and a second positioning methods or functionalities, and the switching policy comprises an indication of a computational model that is to be used by the apparatus for the first positioning method or functionality, execute the computational model that is for the first positioning method or functionality, obtain, from the computational model, an output and a first confidence level associated with the output, provide to the location management function an indication of the confidence level for determining, based on the first confidence level, if a positioning method or functionality, that is being used, is to be switched from the first positioning method or functionality to the second positioning method or functionality.

According to an eighteenth aspect there is provided a computer readable medium comprising program instructions stored thereon for performing at least the following: receiving an indication regarding a switching policy from a location management function, wherein the switching policy is for switching between a first and a second positioning methods or functionalities, and the switching policy comprises an indication of a computational model that is to be used by the apparatus for the first positioning method or functionality, executing the computational model that is for the first positioning method or functionality, obtaining, from the computational model, an output and a first confidence level associated with the output, providing to the location management function an indication of the confidence level for determining, based on the first confidence level, if a positioning method or functionality, that is being used, is to be switched from the first positioning method or functionality to the second positioning method or functionality.

### List of Drawings

In the following, the invention will be described in greater detail with reference to the embodiments and the accompanying drawings, in which
FIG. 1 illustrates an example embodiment of a radio access network.
FIG. 2 illustrates an example embodiment of a two-step positioning.
FIG. 3A illustrates an example embodiment in which a two-step positioning method or functionality comprises an additional intermediate output.
FIG. 3B illustrates an example embodiment in which a one-step positioning method or functionality is used with a confidence level.
FIG. 4 illustrates a flow chart according to an example embodiment for utilizing the confidence level.
FIG. 5 illustrates a signaling chart according to an example embodiment.
FIG. 6A illustrates an example embodiment of implementing a ML model that provides the confidence level as an output.
FIG. 6B and FIG. 6C illustrate example embodiments of training a ML architecture.
FIG. 7 and FIG. 8 illustrate example embodiments of an apparatus.
FIG. 9 illustrates a signaling chart according to an example embodiment.

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, microcontrollers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments described herein may be implemented in a communication system, such as in at least one of the following: Global System for Mobile Communications (GSM) or any other second generation cellular communication system, Universal Mobile Telecommunication System (UMTS, 3G) based on basic wideband-code division multiple access (W-CDMA), high-speed packet access (HSPA), Long Term Evolution (LTE), LTE-Advanced, a system based on IEEE 802.11 specifications, a system based on IEEE 802.15 specifications, a fifth generation (5G) mobile or cellular communication system, 5G-Advanced and/or 6G. The embodiments are not, however, restricted to the systems given as an example but a person skilled in the art may apply the solution to other communication systems provided with necessary properties.

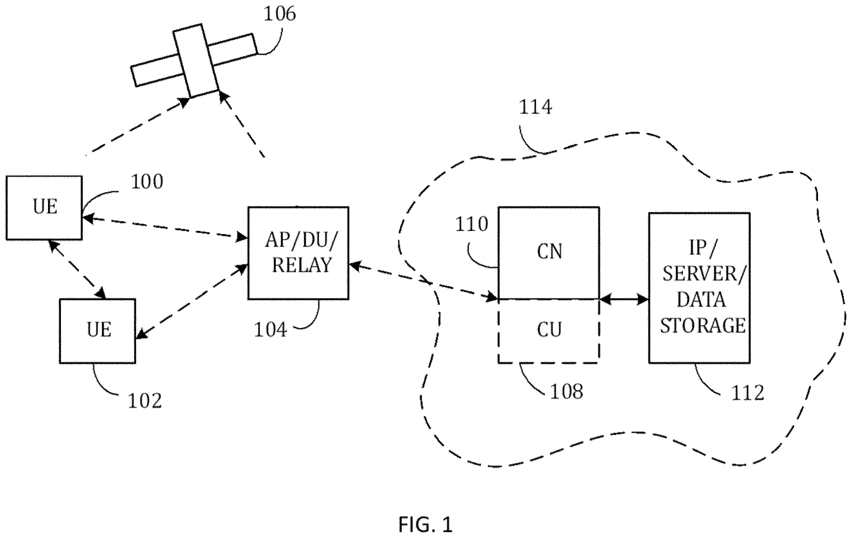

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may comprise also other functions and structures than those shown in FIG. 1. The example of FIG. 1 shows a part of an exemplifying radio access network.

FIG. 1 shows terminal devices 100 and 102 configured to be in a wireless connection on one or more communication channels in a cell with an access node (such as (e/g)NodeB) 104 providing the cell. The terminal devices 100 and 102 may also be called as mobile device, or user equipment (UE), or user terminal, user device, etc. The access node 104 may also be referred to as a node, or a base station, or any other type of interfacing device including a relay station capable of operating in a wireless environment. The physical link from a terminal device to a (e/g)NodeB is called uplink or reverse link and the physical link from the (e/g)NodeB to the terminal device is called downlink or forward link. It should be appreciated that (e/g)NodeBs or their functionalities may be implemented by using any node, host, server or access point etc. entity suitable for such a usage. It is to be noted that although one cell is discussed in this exemplary embodiment, for the sake of simplicity of explanation, multiple cells may be provided by one access node in some example embodiments.

A communication system may comprise more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side may be a serving gateway (S-GW, routing and forwarding user data packets), packet data network gateway (P-GW), for providing connectivity of terminal devices to external packet data networks, or mobile management entity (MME), etc.

The terminal device illustrates one type of an apparatus to which resources on the air interface are allocated and assigned, and thus any feature described herein with a terminal device may be implemented with a corresponding apparatus, such as a relay node. An example of such a relay node is a layer 3 relay (self-backhauling relay) towards the base station. Another example of such a relay node is a layer 2 relay. Such a relay node may contain a terminal device part and a Distributed Unit (DU) part. A CU (centralized unit) may coordinate the DU operation via F1AP -interface for example.

The terminal device may refer to a portable computing device that includes wireless mobile communication devices operating with or without a subscriber identification module (SIM), or an embedded SIM, eSIM. A terminal device may also be a device having capability to operate in Internet of Things (IoT) network which is a scenario in which objects are provided with the ability to transfer data over a network without requiring human-to-human or human-to-computer interaction. The terminal device may also utilise cloud computing. The terminal device (or in some embodiments a layer 3 relay node) is configured to perform one or more of user equipment functionalities. It is to be noted that the terminal device may also be a vehicle or a household appliance capable of using cellular communication.

Additionally, although the apparatuses have been depicted as single entities, different units, processors and/or memory units (not all shown in FIG. 1) may be implemented.

5G enables using multiple input- multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications such as (massive) machine-type communications (mMTC), including vehicular safety, different sensors and real-time control. 5G is expected to have multiple radio interfaces, namely below 6GHz, cmWave and mmWave, and also being integratable with existing legacy radio access technologies, such as the LTE. Integration with the LTE may be implemented as a system, where macro coverage is provided by the LTE and 5G radio interface access comes from small cells by aggregation to the LTE. In other words, 5G is may support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The architecture in LTE networks is fully distributed in the radio and fully centralized in the core network. The low latency applications and services in 5G may require bringing the content close to the radio which may lead to local break out and multi-access edge computing (MEC). 5G enables analytics and knowledge generation to occur at the source of the data. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, and/or utilise services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labour between core network operations and base station operations may differ from that of the LTE or even be non-existent. Some other technology that may be used includes for example Big Data and all-IP, which may change the way networks are being constructed and managed. 5G (or new radio, NR) networks are being designed to support multiple hierarchies, where MEC servers can be placed between the core and the base station or gNodeB (gNB). It should be appreciated that MEC can be applied in 4G networks as well.

It is to be noted that the depicted system is an example of a part of a radio access system and the system may comprise a plurality of (e/g)NodeBs, UEs may have access to a plurality of radio cells and the system may comprise also other apparatuses, such as physical layer relay nodes or other network elements, etc. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. In some exemplary embodiments, in multilayer networks, one access node provides one kind of a cell or cells, and thus a plurality of (e/g)NodeBs are required to provide such a network structure.

In a cellular communication network, a position of a user equipment (UE) may be determined for example by using functionality of the core network. It is to be noted that the position of the UE may also be referred to as a location of the UE and the term position and location may be used interchangeably herein. For example, 5G core may comprise a location management function (LMF). The LMF may comprise an apparatus, such as one or more computing apparatuses, that is configured to cause the functionality of the LMF. The UE may thus be connected to one or more access nodes, such as gNBs, that elaborate a received localization reference signals for positioning the UE. The LMF may perform the localization, which may also be referred to a positioning, as a response to receiving a localization request event. Such positioning may be performed for any kind of UE. The obtain the positioning, a positioning method or functionality may be used. Positioning method or functionality may be understood as a term that refers to any such approach, action, process or functionalities that enable to determine the location of the UE with the services provided by the LMF. Thus, positioning method, or positioning functionality, may be understood to refer to positioning method or functionality. Yet, if the UE is a reduced capability (RedCap UE) with reduced bandwidth support and reduced complexity including a reduced number of receive chains, its ability to support the positioning functionality of the LMF may have some limitations. Also, if the UE is for IoT, such as industrial IoT, or for commercial, public safety, or a vehicle to many use cases, the positioning accuracy is to be precise enough for these use cases. In other words, high positioning accuracy is desirable. To enhance the positioning accuracy, for example Artificial Intelligence/Machine Learning (AI/ML) may be used to enhance the positioning of the UE with the LMF. As ML may be understood to be comprised in the AI, from here on reference is made to ML, although it is to be understood to cover AI as well.

When using ML for positioning, a one-sided model or a two-sided model may be used. In the one-sided model the ML model used may reside either at the side of the UE, or at the side of the network. In the two-sided model, on the other hand, there may be an ML model at the side of the UE performing one part of the inference and another ML model at the side of the network performing another part of the inference. If the positioning is performed such that an output from one ML model provides the position of the UE, then the positioning method or functionality is a one-step positioning method or functionality and may be implemented using a one-sided model. On the other hand, if the positioning is performed such that there is a first ML model that provides an intermediate feature that is then provided to another ML model, or alternatively to a non-ML based positioning method or functionality, then the positioning method may be understood as a two-step positioning method or functionality and it can be implemented using a two-sided model, but also using a one-sided model.

Thus, in the one-sided model for positioning there may be an ML model hosted at UE or at the network, for example, at the LMF. The inputs that are provided to the ML model may comprise various channel observations such as reference signal received power (RSRP) or reference signal received path power (RSRPP) measurements, channel impulse response (CIR), cell IDs, beam IDs, angle of arrival (AoA), angle of departure (AoD), etc. One or more of these may be provided as an input to the ML model which may then provide the location of the UE as an output. The channel observations may be obtained by the UE performing measurements, or by an access node performing uplink (UL) measurements, or a combination of both.

The ML based positioning method or functionality may have a benefit that it may be used for high-accuracy performance even in heavy non line of sight (NLOS) conditions as well as its relative simplicity in terms of training and deployment as for example a single node being used for such scenarios.

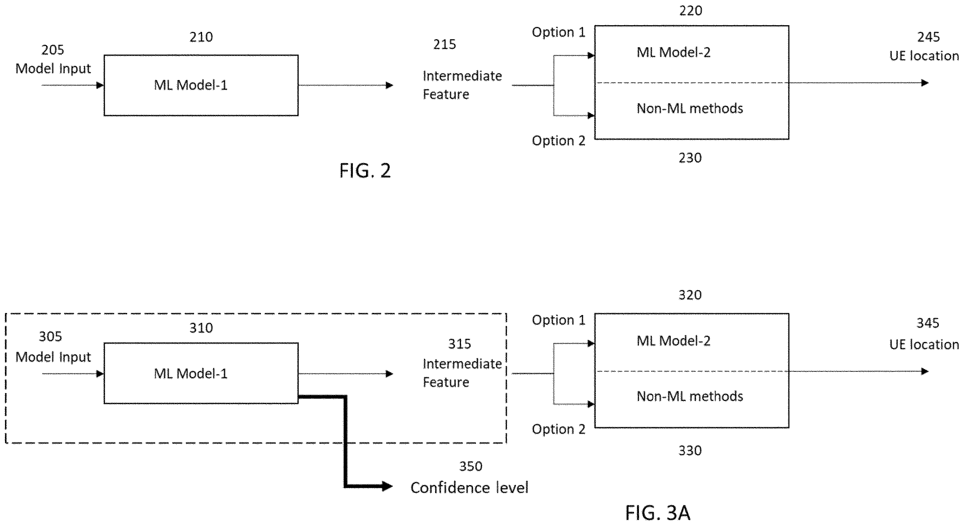

FIG. 2 illustrates an example embodiment of a two-step positioning. It is to be noted that the two-step positioning may be implemented using a two-sided model, which allows to distribute computational complexity between the UE and the network. Alternatively, both steps of the two-step positioning may be implemented on the side of the UE, or on the side of the LMF. In this example embodiment, there is input 205 that is provided to the ML model 210. The input may comprise the various channel observations. The ML model 210 then provides as an output an intermediate feature 215. The intermediate feature may then be provided to another ML model 220, which then provides as an output 245 the location of the UE. It is to be noted that the ML model 220 may receive, in addition to the intermediate feature 215, also other inputs such as different radio measurements. This may be considered as a first option. In the first option, the ML model 210 may be hosted by the UE and the ML model 220 may be hosted by the LMF.

As a second option, the intermediate feature 215 may be provided as an input to a method 230 that is not ML assisted, but still provides the location of the UE as the output 245. Thus, the ML model 210 is hosted at the UE or at the network, for example at the LMF, with possible intermediate features along with improved channel observations sent to the method hosted at the network which then derives the UE location.

It is to be noted that a two-step positioning method or functionality may be applicable to a sidelink scenario as well. For example, the ML model 210 may reside at a first UE and the ML model 220 may reside at a second UE.

A benefit of the two-step positioning method or functionality is that computational complexity and storage requirements may be distributed between the UE and the network, as well as using ML to improve accuracy. For example, with the first option of the two-step positioning method or functionality, a lightweight ML model may be deployed at the UE, which either provides intermediate features that are understood by a more complex ML model hosted by the network, or provide indications such as line of sight (LOS) or NLOS classification, AoA/AoD, etc., that are used by model-2 to derive the position of the UE, which may also be referred to as a UE location. In the second option of the two-step positioning method or functionality, a lightweight ML model may be hosted at the UE and the network then derives the location of the UE. Thus, the two-step positioning method or functionality may provide improved positioning performance with minimal complexity and almost no impact on legacy implementation at the network side. Also, the two-step positioning method of functionality may have a benefit of allowing better generalization.

If a positioning session is to use one of the one-step or two-step positioning method or functionality, this might not be beneficial in diverse areas, environments or use cases. That is, a fixed approach for an entire positioning session may not be efficient considering the dynamicity in the radio conditions e.g. availability of LOS links with respect to transmission and reception points (TRPs), positioning reference signal (PRS) transmission resources, UE mobility, UE location - cell edge vs. cell center, UE power availability, as well as capabilities in terms of bandwidth, computation and storage, etc. In addition to the deployment aspects and model capability may also vary based on the positioning scenarios. Thus, it would be beneficial to allow switching between the positioning methods or functionalities in a dynamic environment with mobility, environmental changes and UEs with different capabilities. Thus, having criteria for triggering switching between the positioning methods or functionalities, within the same positioning session, would be beneficial.

FIG. 3A illustrates an example embodiment in which a two-step positioning method or functionality comprises an additional intermediate output, which in this example embodiment is a confidence level 350. In this example embodiment, input 305, which comprises measurements or channel observations from the UE or a combination of both, is provided to a first ML model 310, which is hosted by the UE. As an output the first ML model 310 provides the intermediate feature 315 which is then provided as an input to a second ML model 320, or to a non-ML method 330 for obtaining the output 345 that is the location of the UE. In addition to the intermediate feature 315, the first ML model 310 provides as an additional output the confidence level 350. The confidence level 350 is associated with the intermediate feature 315, in other words, with the output of the ML model 310. For example, the intermediate feature 315 may comprise a LoS, or a NLoS, indicator as an intermediate feature, and the confidence level 350 represents a level of confidence associated with the LoS, or NLoS, indicator. The level of confidence may also be understood as a level of truthness. The level of confidence is different than a soft indicator corresponding to LoS, or NLoS, probability. The LoS, or a NLoS, indicator is provided as an input to the second ML model 320, or to the non-ML method 330 for obtaining the output 345 that is the location of the UE. The LoS, or a NLoS, indicator may have a benefit of allowing to improve accuracy of the positioning accuracy. It is to be noted that the in addition to the LoS, or a NLoS, indicator, the second ML model 320, or the non-ML method 330, may also be provided with other inputs such as radio measurements for estimating the location of the UE.

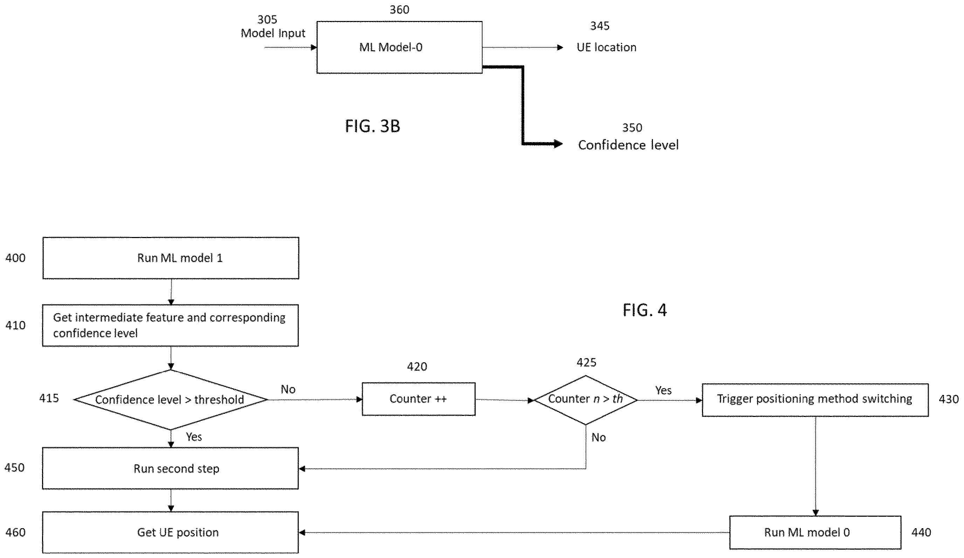

FIG. 3B illustrates an example embodiment in which a one-step positioning method or functionality is used with a confidence level 350. In this example embodiment, the input 305, which corresponds to the input of the example embodiment 3A, is provided to a ML model 360, which different than the ML model 310 or 320. The ML model 360 provides as its output the location of the UE 345. Additionally, the ML model 360 provides as its output the confidence level 350.

A confidence level may be understood as a metric based on which it may be determined whether to use a two-sided positioning method or functionality or to switch to a one-sided positioning method or functionality, or vice versa. FIG. 4 illustrates a flow chart according to an example embodiment for utilizing the confidence level. In this example embodiment, the positioning is performed using a two-step positioning method or functionality. Thus, in the block 400, the first ML model is executed for an input received. Then, in block 410, an intermediate feature and its associated confidence level are obtained from the first ML model. Next, in 415, it is determined if the confidence level is greater than a threshold value. For example, if the confidence level is estimated good enough i.e. higher than a predetermined threshold value (e.g. 95%), then the currently used positioning method or functionality may still be used. Consequently, the flow chart proceeds to block 450 and performs the second step of the two-step positioning method after which in block 460 the location of the UE is obtained.

Alternatively, if the confidence level is lower than, or equal to, the threshold value, an iteration counter may be incremented as illustrated in block 420. The iteration counter enables to keep track of number of iterations the confidence is not satisfactory and when the number of iterations n exceeds a threshold iterations level *th* (e.g. 50), as illustrated in block 425, it may be determined that the two-step positioning method or functionality is no longer appropriate for obtaining the position of the UE. Consequently, the flow chart proceeds to block 430 in which switching of the positioning method or functionality is triggered. In this example embodiment, it means switching from the two-step positioning method or functionality to one-step positioning method or functionality. Then, in block 440, the ML model of the one-step positioning is executed. It is to be noted that a similar approach may be applied to switch from the one-step to two-step approach where the confidence level is needed to be estimated as output simultaneously with obtaining the UE position.

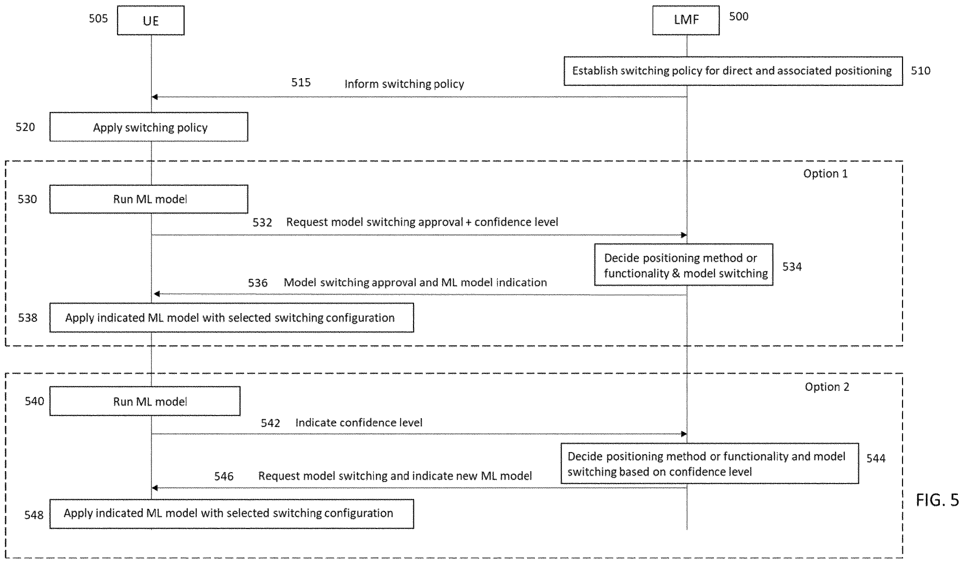

FIG. 5 illustrates a signaling chart according to an example embodiment. In this example embodiment there is an LMF 500 which is configured to select a rule for switching between the two-step positioning method or functionality and one-step positioning method or functionality and to inform the rule to a UE 505. In this example embodiment the rule for switching is based on a confidence level metric and may be correlated with additional criteria such as validity conditions of the ML model and capabilities of the UE.

In this example embodiment, the LMF 500 establishes, in block 510, a policy for switching the positioning method or functionality. The policy is thus a switching policy. This is established for both a one-step positioning method or functionality and for a two-step positioning method or functionality. Establishing may also be understood as determining. The established switching policy is then informed, by the LMF 500, to the UE 505. This may be achieved by transmitting 515 an indication regarding the switching policy. Thus, the UE 505 receives from the LMF 500 the switching policy. The indication regarding the switching policy comprises an architecture for one or more ML models that allow estimating a confidence level. The architecture for the ML model(s) may be indicated for example by indicating an identity (ID) of a ML model that the UE 505 is to apply. Further, the indication may comprise information regarding a threshold value for the confidence level. Then, the UE 505 is caused to apply 520 the indicated switching policy by using the indicated ML architecture. In other words, the UE 505 is to use the indicated ML model(s), which may mean updating the ML model(s) used by the UE 505.

In the switching policy it may be determined if switching the positioning method or functionality is to be initiated by the UE 505, or by the LMF 500. In option 1, the UE 505 is to initiate the switching. In option 2, the LMF 500 is to initiate the switching. The indication 515 may further comprise indication regarding which option the UE 505 is to apply. It is to be noted that the options 1 and 2 are applicable to both one-step positioning and two-step positioning method or functionality.

In option 1, the UE 505 the UE 505 runs 530 the indicated ML model. The indicated ML model provides, as an output, a confidence level. The confidence level is then compared to the threshold value provided by the LMF 500 and if based on the confidence level the UE 505 determined that a switching condition is met, the UE 505 transmits a request 532 to the LMF 500. The request 532 comprises information regarding the confidence level in addition to the request for switching the positioning method or functionality. The LMF 500 then, upon receiving the request 532 from the UE 505, determines 534 if the switching is to be performed. This determination is based, at least partly, on the confidence level received from the UE 505. The LMF 500 may for example determine that another positioning method or functionality is to be used, or the LMF 500 may determine that the current positioning method or functionality is to be kept, but the one or more ML models used in the positioning method or functionality are to be changed to different one or more ML models. In other words, the LMF 500 may determine new ML model(s) to be used for the current positioning method or functionality or the new ML model(s) may be with respect to another positioning method or functionality if the positioning method is to be switched. Correspondingly, the LMF 500 then provides the indication 536 to the UE 505 and the indication 536 comprises an approval for switching the model and indication regarding the one or more new ML models to be used by the UE 505. The indication 536 may further comprise meta data regarding the one or more new ML models and additionally, or alternatively, configuration information regarding the one or more new ML models. Then, the UE 505 applies 538 the one or more ML models indicated by the received indication 536 with the positioning method or functionality determined by the LMF 500.

In option 2, the switching of the positioning method or functionality is initiated by the LMF 500. In this option, the UE 505 uses 540 the ML model indicated by the indication 515 and obtains the confidence level as an output. The UE 505 then provides to the LMF 500 an indication 542 which comprises the confidence level. The LMF 500 then determines 544 based on this confidence level if the positioning method or functionality is to be switched. The LMF 500 also determines if one or more new ML models are to be used. The new ML model(s) may be used even if the positioning method is not changed. The LMF 500 then provides to the UE 505 a request 546. The request 546 comprises an indication of the one or more new ML models to be used by the UE 505. The request 546 may also comprise a request to switch the positioning method or functionality in case the LMF 500 determined that the positioning method or functionality is to be switched. Upon receiving the request 546, the UE 505 then applies 548 the one of more new ML models indicated using the request 546. Optionally, if the LMF 500 determined that the positioning method or functionality is to be switched, the UE 505 also switches the positioning method or functionality that is being used.

It is to be noted that the at least one new ML model may have a further confidence level associated with the output of the at least one new ML model. For example, if there are two new ML models, they may provide their respective confidence levels associated with their respective outputs. Correspondingly, if there is one new ML method, then that provides a confidence level associated with its output. Such further confidence level may also be used as a basis for determining if the currently used positioning method or functionality is to switched, or if the ML model(s) currently being used are to be switched even if the positioning method or functionality was not switched.

It is also to be noted that in this example embodiment, when the LMF 500 selects a new ML model during switching, the new ML model may be indicated to the UE by indicating the whole model configuration and parameters, or if a set of ML models are stored at UE 505 side, by indicating the ID of the ML model for the UE 505 to use. Additionally, a fall-back option a non-ML based positioning method can be added if ML positioning performance is not satisfactory after several switching iterations.

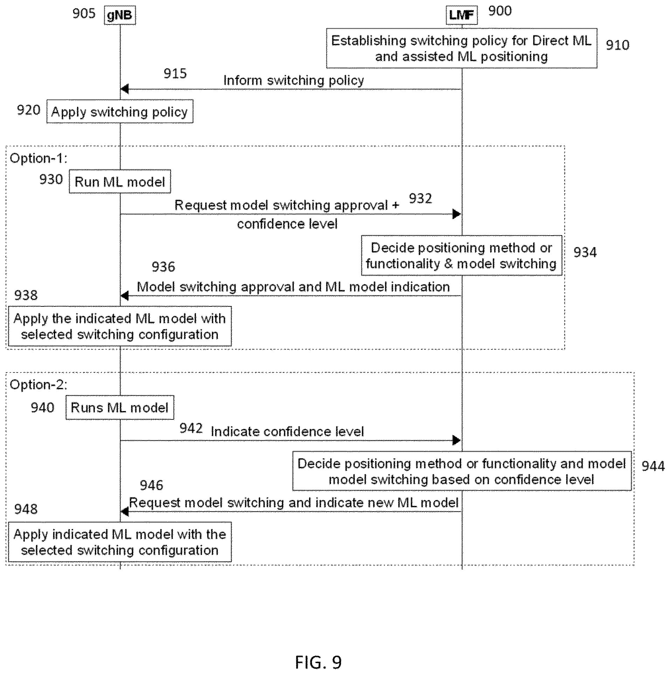

FIG. 9 illustrates a signaling chart according to an example embodiment. In this example embodiment there is an LMF configured to select a rule for switching between the two-step positioning method or functionality and one-step positioning method or functionality and to inform the rule to an access node, e.g. a base station or a gNB. In this example embodiment the rule for switching is based on a confidence level metric and may be correlated with additional criteria such as validity conditions of the ML model and capabilities of the base station. All the steps are similar to what is described for UE case in FIG.5.

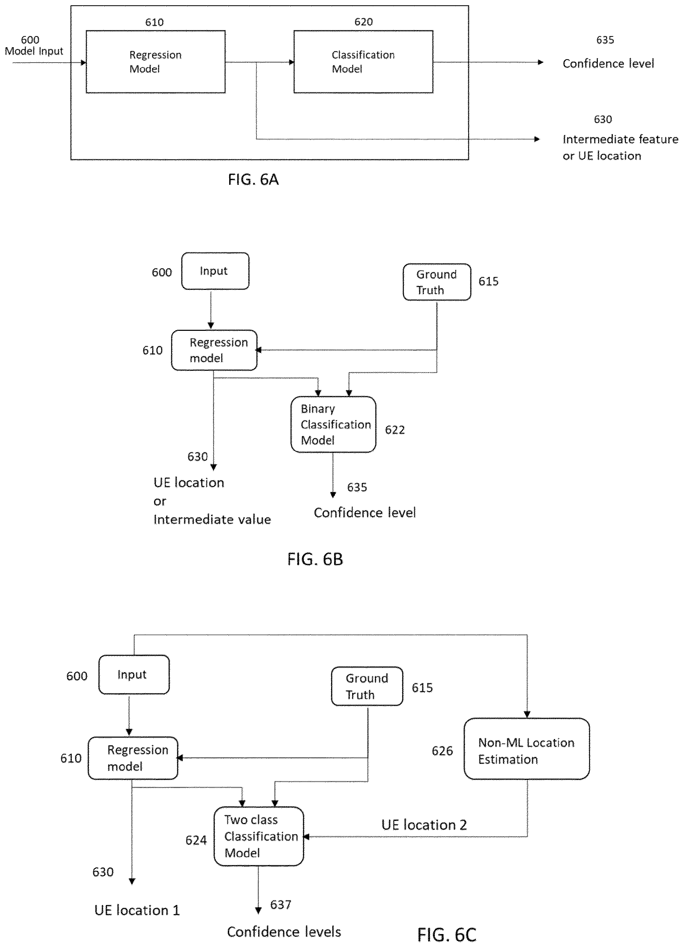

FIG. 6A illustrates an example embodiment of implementing a ML model that provides the confidence level as an output. In this example embodiment, there is an architecture that may be utilized for ML model of the one-step positioning method or functionality, or for the first ML model of the two-step positioning method or functionality. In this example embodiment, the input 600 to the ML model is first provided to a regression model 610. The regression model 610 may comprise a ML model such as a neural network that is used for estimating the position of the UE in the one-step positioning method or functionality, or the intermediate feature in the two-step positioning method or functionality. Thus, the output 630 of the regression model 610 may be an intermediate feature or the location of the UE.

In addition to the regression model 610 there is a second model, a classification model 620 cascaded with the regression model 610. The classification model 620 provides an estimation of the confidence level 635 based on the output of the regression model 610 that is provided as an input to the classification model 620. Thus, this hierarchical ML architecture allows to obtain the confidence value 635 in addition to the output 630.

FIG. 6B and FIG. 6C illustrate example embodiments of training a ML architecture such as the ML architecture illustrated in FIG. 6A. FIG. 6B illustrates a direct training approach and FIG. 6C an indirect training approach.

In FIG. 6B, the input 600 along with a labelled data set collected for the regression model are provided as inputs for the regression model 610 and also for the classification model that in this example embodiment is binary classification model 622. The labelled data set may be understood as ground truth 615. The input 600 may be for example radio measurements obtained by a UE and the ground truth may comprise intermediate features such as LoS or NLoS indicator. The ground truth may be understood as inputs that are verified as correct or otherwise known to be true and desired ML output, for example, radio measurements and their corresponding true positions or intermediate features. The regression model provides as the output the location of the UE or an intermediate feature, depending on if a one-step or a two-step positioning method is used. The binary classification model 622, which also uses the ground truth for the training, provides as an output the confidence level 635.

FIG. 6C is a variation of the example embodiment of FIG. 6B. In this example embodiment the confidence level is obtained for an ML-based positioning method or functionality as well as for the two-step positioning method or functionality that uses in the second step the non-ML-based method. Thus, the classification model in this example embodiment is a two-class classification model 624. Additionally, the input is also provided to a non-ML location estimation unit, the output of which is then used as an input to the two-class classification model 624. Thus, the output 637 of the two-class classification model 624 is both the confidence level for the ML-based positioning method or functionality and for the non-ML based positioning method or functionality.

In some further example embodiments, the switching policy may be set based on the confidence level and, additionally, based on validity conditions. For example, if the switching policy is established based on the confidence level and the validity conditions, there may be different decision bias towards switching for different confidence levels. There may be different parameters that affect the different bias. For example, model deployment nodes, e.g. whether or not UE is capable of hosting an ML model, radio conditions dependent parameter, e.g. number of TRPs with LoS links, estimated UE location, e.g. geographical area, or whether the UE is located in cell edge or cell center, UE mobility, e.g. speed, trajectory, etc., availability and accuracy of ground truth labeling at UE side, and/or UE radio signal sensitivity to obtain metrics, such as CIR, RSRPP, etc. In such example embodiments, the UE may be provided with a mapping table which maps different confidence level thresholds to at least different radio conditions dependent parameter e.g. number of TRPs with LoS links, locations etc.

Further, in some example embodiments, switching policy may be set based on the confidence level and UE capabilities such as UE power availability, or other UE capability constraint, whether or not the UE is currently or expected to be hosting ML model. In this example embodiment, for each model deployment option, UE may be provided with a mapping table which maps different UE power availabilities, or other UE capability constraints, to different confidence level thresholds. Further, additionally or alternatively, the switching policy may be based on, in addition to the confidence level, on operational condition. The operational condition may be understood to refer to one or more conditions affecting communication between the UE and the LMF.

For example, UE may prefer to do LMF-sided one-step approach to avoid any local ML model tasks to save power. However, if the confidence level drops in this one-step approach, UE may have to decide on tradeoff between the power saving and improvement of positioning accuracy. Hence, e.g. UE may choose to switch to the two-step positioning approach and host the first ML model when confidence level of LMF-sided one-step drops to, for example, less than 90% by setting the confidence level threshold to 90% when the power availability is, for example, at least 80%, i.e. UE prioritizes accuracy over power saving. On the other hand, when the power availability is, for example, 60%, it may reduce the confidence level threshold to, for example, 80% for switching, i.e. UE prioritizes power saving over accuracy.

In some further example embodiments, switching to other model for the same approach using confidence level. In such example embodiments, the switching may be performed for the same positioning approach with different ML model with different hyperparameters but same input/output sets, or with different ML model and different inputs, such as ToA instead of RSRP. In such example embodiments, the switching policy may be as follows: first perform switching to another model for the same positioning approach and if the performance is yet not satisfactory switch to the other positioning approach.

The example embodiments above are discussed in the context of ML models. It is to be noted that an ML model is an example of a computational model, which could also be understood as a model that is configurable and additionally, or alternatively, also adaptive. Thus, the example embodiments discussed above are compatible with any suitable computational model. A suitable computational model may be considered to be for example such as computational model that can be used to model a rich relationship between inputs and outputs. A rich relationship may be for example such a complex relationship that a regression model, or other similar mathematical models may not be easily compatible to model such relationship.

The inputs and outputs that are to be modelled by a computational model that is compatible with the example embodiments described above may be for example positioning reference signal radio measurements, that may be provided as inputs and then the corresponding output may be the location of the UE. As an example of the ML model that could be used in the context of the example embodiments described above is neural network, although other suitable supervised learning algorithms could alternatively, or additionally, be used. A benefit of a neural network is that it may improve its accuracy over time and once a neural network has been finetuned for accuracy, it may enable classifying and clustering data at high velocity.

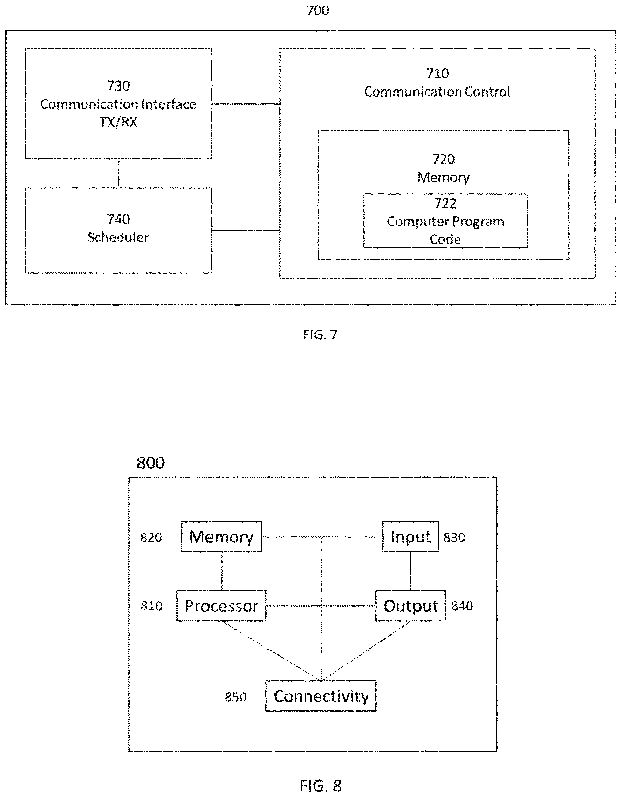

FIG. 7 illustrates an example embodiment of an apparatus that may be an access node or be comprised in an access node such as a gNB or base station. The apparatus may be, for example, a circuitry or a chipset applicable to an access node to realize the described embodiments. The apparatus 700 may be an electronic device comprising one or more electronic circuitries. The apparatus 700 may comprise a communication control circuitry 710 such as at least one processor, and at least one memory 720 including a computer program code (software) 722 wherein the at least one memory and the computer program code (software) 722 are configured, with the at least one processor, to cause the apparatus 700 to carry out any one of the example embodiments of the access node described above.

The memory 720 may be implemented using any suitable data storage technology, such as semiconductor-based memory devices, flash memory, magnetic memory devices and systems, optical memory devices and systems, fixed memory and removable memory. The memory may comprise a configuration database for storing configuration data. For example, the configuration database may store current neighbour cell list, and, in some example embodiments, structures of the frames used in the detected neighbour cells.

The apparatus 700 may further comprise a communication interface 730 comprising hardware and/or software for realizing communication connectivity according to one or more communication protocols. The communication interface 730 may provide the apparatus with radio communication capabilities to communicate in the cellular communication system. The communication interface may, for example, provide a radio interface to terminal devices. The apparatus 700 may further comprise another interface towards a core network such as the network coordinator apparatus and/or to the access nodes of the cellular communication system. The apparatus 700 may further comprise a scheduler 740 that is configured to allocate resources.

FIG. 8 illustrates an apparatus 800, which may be an apparatus such as, or comprised in, a user equipment or an access node, according to an example embodiment. The apparatus 800 comprises a processor 810. The processor 810 interprets computer program instructions and processes data. The processor 810 may comprise one or more programmable processors. The processor 810 may comprise programmable hardware with embedded firmware and may, alternatively or additionally, comprise one or more application specific integrated circuits, ASICs.

The processor 810 is coupled to a memory 820. The processor is configured to read and write data to and from the memory 820. The memory 820 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 820 stores computer readable instructions that are execute by the processor 810. For example, non-volatile memory stores the computer readable instructions and the processor 810 executes the instructions using volatile memory for temporary storage of data and/or instructions.

The computer readable instructions may have been pre-stored to the memory 820 or, alternatively or additionally, they may be received, by the apparatus, via electromagnetic carrier signal and/or may be copied from a physical entity such as computer program product. Execution of the computer readable instructions causes the apparatus 800 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 800 further comprises, or is connected to, an input unit 830. The input unit 830 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 830 may comprise an interface to which external devices may connect to.

The apparatus 800 also comprises an output unit 840. The output unit comprises or is connected to one or more displays capable of rendering visual content such as a light emitting diode, LED, display, a liquid crystal display, LCD and a liquid crystal on silicon, LCoS, display. The output unit 840 further comprises one or more audio outputs. The one or more audio outputs may be for example loudspeakers or a set of headphones.

The apparatus 800 may further comprise a connectivity unit 850. The connectivity unit 850 enables wired and/or wireless connectivity to external networks. The connectivity unit 850 may comprise one or more antennas and one or more receivers that may be integrated to the apparatus 800 or the apparatus 800 may be connected to. The connectivity unit 850 may comprise an integrated circuit or a set of integrated circuits that provide the wireless communication capability for the apparatus 800. Alternatively, the wireless connectivity may be a hardwired application specific integrated circuit, ASIC.

It is to be noted that the apparatus 800 may further comprise various component not illustrated in the FIG. 8. The various components may be hardware component and/or software components.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising at least one processor, and at least one memory storing instructions that, when executed by the at least one processor, to cause the apparatus at least to:
establish a switching policy for switching between a first and a second positioning methods or functionalities that are for positioning a user equipment;
provide an indication regarding the switching policy to the user equipment or an access node, wherein the switching policy comprises an indication of a computational model that is to be used by the user equipment or the access node for the first positioning method or functionality;
receive, from the user equipment or the access node, a first confidence level associated with an output of the computational model used by the user equipment or the access node for the first positioning method or functionality; and
determine, based on the confidence level, if a positioning method or functionality, that is being used, is to be switched from the first positioning method or functionality to the second positioning method or functionality.

2. An apparatus according to claim 1, wherein the apparatus is further caused to determine, based on the first confidence level, at least one new computational model that is to be used by the user equipment or the access node and indicate the at least one new computational model to the user equipment or the access node.

3. An apparatus according to claim 2, wherein the at least one new computational model provides a second confidence level that is associated with the output of the at least one new computational model and the apparatus is further caused to:
determine, based on the second confidence level if the first positioning method or functionality is to be switched to the second positioning method or functionality, when the at least one new computational model is used with the first positioning method or functionality;
determine, based on the second confidence level if the second positioning method or functionality is to be switched to the first positioning method or functionality, when the at least one new computational model is used with the second positioning method or functionality; or
determine if the at least one new computational model is to be changed to another computational model.

4. An apparatus according to any previous claim, wherein the apparatus is further caused to:
receive, from the user equipment or the access node, a request for switching the positioning method or functionality that is being used; and
in response to receiving the request, performing the determination if the positioning method or functionality, that is being used, is to be switched from the first positioning method or functionality to the second positioning method or functionality.

5. An apparatus according to any of claims 1 to 3, wherein the apparatus is further caused to:
determine if the positioning method or functionality, that is being used, is to be switched from the first positioning method or functionality, to the second positioning method or functionality, based on comparing the first confidence level to a threshold value, and
if the first confidence level is less than the threshold value, determine to switch from the first positioning method or functionality to the second positioning method or functionality; and
provide to the user equipment or the access node a request for switching from the first positioning method or functionality to the second positioning method or functionality.

6. An apparatus according to any previous claim, wherein the determining if the first positioning method or functionality is to be switched to the second positioning method or functionality is further based on one or more of the following: validity conditions, capabilities of the user equipment or the access node, operational condition, or the first confidence level.

7. An apparatus according to any previous claim, wherein the first positioning method or functionality is a one-step positioning method or functionality, and the second positioning method or functionality is a two-step positioning method or functionality; or wherein the first positioning method or functionality is the two-step positioning method or functionality and the second positioning method or functionality is the one-step positioning method or functionality.

8. An apparatus according to any previous claim, wherein the apparatus is, or is comprised in, a location management function.

9. An apparatus comprising at least one processor, and at least one memory storing instructions that, when executed by the at least one processor, to cause the apparatus at least to:
receive an indication regarding a switching policy from a location management function, wherein the switching policy is for switching between a first and a second positioning methods or functionalities, and the switching policy comprises an indication of a computational model that is to be used by the apparatus for the first positioning method or functionality;
execute the computational model that is for the first positioning method or functionality;
obtain, from the computational model, an output and a first confidence level associated with the output;
provide to the location management function an indication of the confidence level for determining, based on the first confidence level, if a positioning method or functionality, that is being used, is to be switched from the first positioning method or functionality to the second positioning method or functionality.

10. An apparatus according to claim 9, wherein the apparatus is further caused to:
compare the first confidence level to a threshold value; and
if the first confidence level is below the threshold value, transmit to the location management function a request for switching the first positioning method functionality to the second positioning method and functionality.

11. An apparatus according to claim 10, wherein the apparatus is further caused to increase a counter if the first confidence level is below the threshold value and transmit the request for switching the first positioning method and functionality to the second positioning method and functionality when the counter has a value greater than a threshold value determined for the counter.

12. An apparatus according to any of claims 9 to 11, wherein the apparatus is further caused to receive, from the location management function, an indication of at least one new computational model, or a non-machine learning based positioning method, to be used, and to apply the at least one new computational model, or the non-machine learning based positioning method.

13. An apparatus according to claim 12, wherein the at least one new computational model, or the non-machine learning based positioning method, is for the first positioning method, or wherein the at least one new computational model, or the non-machine learning based positioning method, is for the second positioning method or functionality.

14. An apparatus according to any of claims 9 to 13, wherein the first positioning method or functionality is a one-step positioning method or functionality, and the second positioning method or functionality is a two-step positioning method or functionality; or wherein the first positioning method or functionality is the two-step positioning method or functionality and the second positioning method or functionality is the one-step positioning method or functionality.

15. An apparatus according to any of claims 12 to 14, wherein the at least one new computational model provides a second confidence level that is associated with the output of the at least one new computational model and the apparatus is further caused to provide an indication of the second confidence level to the location management function for determining one of the following:
if the first positioning method or functionality is to be switched to the second positioning method or functionality, when the at least one new computational model is used with the first positioning method or functionality;
if the second positioning method or functionality is to be switched to the first positioning method or functionality, when the at least one new computational model is used with the second positioning method or functionality; or
if the at least one new computational model is to be changed to another computational model.

16. An apparatus according to any previous claim, wherein the apparatus is comprised in a user equipment or an access node.

17. A method comprising:
establishing a switching policy for switching between a first and a second positioning methods or functionalities that are for positioning a user equipment;
providing an indication regarding the switching policy to the user equipment or an access node, wherein the switching policy comprises an indication of a computational model that is to be used by the user equipment or the access node for the first positioning method or functionality;
receiving, from the user equipment or the access node, a first confidence level associated with an output of the computational model used by the user equipment or the access node for the first positioning method or functionality; and
determining, based on the confidence level, if a positioning method or functionality, that is being used, is to be switched from the first positioning method or functionality to the second positioning method or functionality.

18. A method comprising:
receiving an indication regarding a switching policy from a location management function, wherein the switching policy is for switching between a first and a second positioning methods or functionalities, and the switching policy comprises an indication of a computational model that is to be used by the apparatus for the first positioning method or functionality;
executing the computational model that is for the first positioning method or functionality;
obtaining, from the computational model, an output and a first confidence level associated with the output;
providing to the location management function an indication of the confidence level for determining, based on the first confidence level, if a positioning method or functionality, that is being used, is to be switched from the first positioning method or functionality to the second positioning method or functionality.

19. A non-transitory computer readable medium comprising program instructions that, when executed by an apparatus, cause the apparatus to perform at least the following:
establish a switching policy for switching between a first and a second positioning methods or functionalities that are for positioning a user equipment;
provide an indication regarding the switching policy to the user equipment or an access node, wherein the switching policy comprises an indication of a computational model that is to be used by the user equipment or the access node for the first positioning method or functionality;
receive, from the user equipment, a first confidence level associated with an output of the computational model used by the user equipment or the access node for the first positioning method or functionality; and
determine, based on the confidence level, if a positioning method or functionality, that is being used, is to be switched from the first positioning method or functionality to the second positioning method or functionality.

20. A non-transitory computer readable medium comprising program instructions that, when executed by an apparatus, cause the apparatus to perform at least the following:
receive an indication regarding a switching policy from a location management function, wherein the switching policy is for switching between a first and a second positioning methods or functionalities, and the switching policy comprises an indication of a computational model that is to be used by the apparatus for the first positioning method or functionality;
execute the computational model that is for the first positioning method or functionality;
obtain, from the computational model, an output and a first confidence level associated with the output;
provide to the location management function an indication of the confidence level for determining, based on the first confidence level, if a positioning method or functionality, that is being used, is to be switched from the first positioning method or functionality to the second positioning method or functionality.
